## Europäisches Patentamt
## European Patent Office
## Office européen des brevets

(11) Veröffentlichungsnummer: **0 473 031 B1**

# EUROPÄISCHE PATENTSCHRIFT

(45) Veröffentlichungstag der Patentschrift: **18.01.95**

(51) Int. Cl.[6]: **C09D 5/44**, C08G 59/50, C08G 59/14

(21) Anmeldenummer: **91113764.4**

(22) Anmeldetag: **16.08.91**

(54) **Verfahren zur Herstellung von Bindemitteln für kathodisch abscheidbare Lacke und deren Verwendung.**

(30) Priorität: **24.08.90 DE 4026859**

(43) Veröffentlichungstag der Anmeldung:
**04.03.92 Patentblatt 92/10**

(45) Bekanntmachung des Hinweises auf die Patenterteilung:
**18.01.95 Patentblatt 95/03**

(84) Benannte Vertragsstaaten:
**AT DE ES FR GB IT**

(56) Entgegenhaltungen:
**EP-A- 0 193 102**
**EP-A- 0 200 397**
**EP-A- 0 314 983**

**WORLD PATENTS INDEX LATEST Week 9012,**
**Derwent Publications Ltd., London, GB;**
**AN90:086448; & JP-A-2 038 425**

(73) Patentinhaber: **Vianova Kunstharz Aktiengesellschaft**
**Bundesstrasse 175**
**A-8402 Werndorf (AT)**

(72) Erfinder: **Paar, Willibald, Dr.-Chem.**
**Schanzelgasse 19**
**A-8010 Graz (AT)**
Erfinder: **Hönig, Helmut, Dr.-Phys.**
**Seebachergasse 10**
**A-8010 Graz (AT)**

**Beschreibung**

Die Erfindung betrifft ein Verfahren zur Herstellung von Bindemitteln für kathodisch abscheidbare Elektrotauchlacke, welche zur Verbesserung der Abscheidungscharakteristik, der Badstabilität und der Filmeigenschaften Umsetzungsprodukte von sekundäre Aminogruppen aufweisenden Polyoxyalkylenpolyaminen mit Epoxidharzen enthalten. Die erfindungsgemäß hergestellten Bindemittel sind insbesonders zur Formulierung von Elektrotauchlacken, mit welchen auch unter normalen Abscheidungsbedingungen Filme mit höherer Schichtstärke erreicht werden können, geeignet.

In der EP 0 070 550 A1 werden Umsetzungsprodukte von Polyepoxidverbindungen mit primären Polyoxyalkylenpolyaminen beschrieben. Mit derartigen Bindemitteln formulierte Lacke sollen kathodisch applizierbare Filme mit erhöhter Kratersicherheit ergeben. Sie sind wegen der Polyfunktionalität der eingesetzten Rohstoffe nicht reproduzierbar herzustellen und neigen bei der Synthese zum Gelieren.

Die EP 0 193 685 B1 betrifft Zusatzkomponenten für kationische Elektrotauchlacke auf Basis von Umsetzungsprodukten von Polyoxyalkylenpolyaminen mit Monoepoxiden. Diese Produkte haben ausgeprägt hydrophile Eigenschaften und führen bei der Schwitzwasser- bzw. Salznebelbelastung zu einer Verschlechterung der Haftung der eingebrannten Filme auf nicht vorbehandeltem Stahlblech.

Es wurde nun gefunden, daß mit kathodisch abscheidbaren Lacken, die als Bindemittel Polyepoxidharze enthalten, welche anteilig mit sekundäre Aminogruppen aufweisenden Polyoxalkylenpolyaminen modifiziert sind, auch unter normalen Abscheidungsbedingungen Filme mit höherer Schichtstärke erreicht werden können.

Die vorliegende Erfindung betrifft demgemäß ein Verfahren zur Herstellung von nach vollständiger oder teilweiser Neutralisation mit anorganischen und/oder organischen Säuren wasserverdünnbaren Bindemitteln auf der Basis von aminmodifizierten Epoxidharzen, welches dadurch gekennzeichnet ist, daß man 5 bis 60 Mol%, vorzugsweise 10 bis 35 Mol%, der Epoxidgruppen eines Epoxidharzes mit mindestens zwei 1,2-Epoxidgruppen pro Molekül, welches durch Umsetzung von Bisphenolen oder Novolaken oder Glykolen mit (Methyl)epichlorhydrin erhalten wurde, und dessen Epoxidäquivalentgewicht 170 bis 1000 beträgt, mit einem sekundäre Aminogruppen aufweisenden Polyoxyalkylenpolyamin und den Rest der Epoxidgruppen in bekannter Weise mit Aminen und/oder Carbonsäuren und/oder substituierten Phenolen bei 60 bis 120°C vollständig umsetzt, wobei die Menge der basischen Komponenten so gewählt wird, daß das Endprodukt eine theoretische Aminzahl von mindestens 30 mg KOH/g, vorzugsweise von 50 bis 110 mg KOH/g, aufweist.

Die Erfindung betrifft weiters die Verwendung der erfindungsgemäß hergestellten Bindemittel zur Formulierung von Elektrotauchlacken, mit welchen auch unter normalen Abscheidungsbedingungen Filme mit höherer Schichtstärke erreicht werden können.

Durch das erfindungsgemäße Verfahren können in einfacher und übersichtlicher Weise Produkte erhalten werden, die sowohl als Bindemittel in Kombination mit Härtungskomponenten oder als Alleinbindemittel bei entsprechender Modifizierung mit härtbaren Gruppen, wie halbblockierten Diisocyanaten, aber auch, aufgrund ihrer guten Pigmentbenetzung, zur Herstellung von Pigmentpasten für eine spätere Abmischung mit anderen kathodisch abscheidbaren Elektrotauchlackbindemitteln eingesetzt werden können.

Als harzartige Verbindungen mit mindestens zwei 1,2-Epoxidgruppen, welche erfindungsgemäß mit den sekundäre Aminogruppen aufweisenden Polyoxyalkylenpolyaminen umgesetzt werden, kommen die bekannten Epoxidharze, welche durch Umsetzung von Bisphenolen, Novolaken, Glykolen etc. mit Epichlorhydrin oder Methylepichlorhydrin erhalten werden, zum Einsatz. Diese Produkte sind im Handel in einer breiten Palette zugänglich. Besonders bevorzugt werden die Produkte auf Basis von Bisphenol A oder Novolaken, welche ein Epoxidäquivalentgewicht zwischen 170 und 1000 aufweisen.

Die erfindungsgemäß eingesetzten Modifikatoren werden, wie z. B. in der EP 0 369 752 A2 beschrieben. durch Umsetzung von Polyoxyalkylenpolyolen mit primären Aminen erhalten.

Die für die Reaktion mit den freigebliebenen Epoxidgrupppen der Epoxidharze eingesetzten übrigen Amine. Carbonsäuren oder substituierten Phenole, in den Beispielen "Restmodifikatoren" genannt, sind dem Fachmann in großer Zahl bekannt und bedürfen keiner näheren Erläuterung.

Die Herstellung der Bindemittel erfolgt durch die Umsetzung der Komponenten bei 60 - 120°C. bis keine freien Epoxidgruppen mehr nachweisbar sind.

Die nachfolgenden Beispiele sollen die Erfindung erläutern, stellen jedoch keine Beschränkung ihres Umfanges dar. Alle Angaben in Teilen oder Prozenten beziehen sich, soferne nicht anders angegeben, auf Gewichtseinheiten. Alle Angaben in den Tabellen beziehen sich auf Feststoffe.

In den Beispielen werden folgende Abkürzungen verwendet:

AM 1  sekundäres Amin, hergestellt gemäß
   EP 0 369 752 A2,

Beispiel 1 (Aminzahl: 27,5 mg KOH/g,
Äquivalentgewicht: ca. 2040)

AM 2      sekundäres Amin, hergestellt gemäß
EP 0 369 752 A2,
Beispiel 6 (Aminzahl: ca. 100 mg KOH/g,
Äquivalentgewicht: ca. 560)

AM 3      sekundäres Amin, hergestellt gemäß
EP 0 369 752 A2,
Beispiel 9 (Aminzahl: ca. 25 mg KOH/g,
Äquivalentgewicht: ca. 2240)

AM 4      sekundäres Amin (Novamin® N 10 der Fa. RWE-DEA-AG)
Aminzahl: ca. 280 mg KOH/g
Äquivalentgewicht: ca. 200

AM 5      sekundäres Amin (Novamin® N 20 der Fa. RWE-DEA-AG)
Aminzahl: ca. 183 mg KOH/g
Äquivalentgewicht: ca. 300

DEA      Diethylamin

DEAPA      3-Diethylamino-1-propylamin

EPH I      Epoxidharz auf Basis Bisphenol A
Epoxidäquivalent ca. 200

EPH II      Epoxidharz auf Basis Bisphenol A
Epoxidäquivalent ca. 500

MP      Methoxypropanol

EP      Ethoxypropanol

NPH      Nonylphenol

TDI      Toluylendiisocyanat (handelsübliches Isomerengemisch mit 80 % 2,4 TDI)

SPH      Umsetzungsprodukt eines Mols Phenol mit 2 Mol DEAPA und 2 Mol Formaldehyd sowie mit 2 Mol eines mit 2-Ethylhexanol halbblockierten TDI (MG = 986); die Herstellung dieses Produktes ist beispielsweise in der AT-PS 382 160 beschrieben.

H 1      Umsetzungsprodukt eines Mols Trimethylolpropan mit 3 Mol eines mit MP halbblockierten TDI (Urethanvernetzer)

H 2      Umesterungshärter analog Beispiel 2 der AT-PS 372.099 (Umesterungsprodukt aus 3 Mol Malonsäuredimethylester und 1 Mol Trimethylolpropan)
(H 1 und H 2 werden eingesetzt, soferne die Bindemittel keine selbstvernetzenden Eigenschaften aufweisen.)

Sn      Zinn-Katalysator (Dibutylzinndilaurat), berechnet als Metall

Pb      Blei-Katalysator (Bleioktoat), berechnet als Metall

In Tabelle 1 sind die Ausgangsmaterialien für die erfindungsgemäß hergestellten Bindemittel zusammengefaßt.

In einem geeigneten Reaktionsgefäß werden alle Komponenten bei 60°C gemischt. Die Temperatur wird langsam auf 80°C und, falls erforderlich, bis auf 120°C gesteigert und so lange gehalten, bis keine freien Epoxidgruppen mehr nachweisbar sind.

Die gemäß Tabelle 1 hergestellten Bindemittel werden in den in Tabelle 2 angegebenen Gewichtsverhältnissen mit dem Vernetzungsmittel und dem Katalysator gemischt. Die Menge des Neutralisationsmittels für die Herstellung eines stabilen wäßrigen Klarlackes (in Millimol Ameisensäure / 100 g Festharz) ist in der letzten Spalte angegeben.

Für die Herstellung pigmentierter Lacke werden die Bindemittelkombinationen 1 - 5 nach folgender Rezeptur verarbeitet:

100 Tle Festharz

0,5 Tle Farbruß

3,3 Tle basisches Bleisilikatpigment

35,5 Tle Titandioxid

5 Tle Monoethylenglykolmonohexylether

Die Prüfung der pigmentierten Lacke erfolgt durch elektrische Abscheidung auf nicht phosphatiertes, entfettetes Stahlblech, das als Kathode geschaltet wird. Anschließend werden die Filme bei 180°C 25 Minuten eingebrannt und 360 Stunden auf ihre Beständigkeit im Salzsprühtest nach ASTM getestet.

Tabelle 3 faßt die jeweiligen Daten zusammen. Als Vergleichsbeispiel wurde ein kathodisch abscheidbarer ET-Lack gemäß Beispiel 1 der EP 0 193 685 B1 herangezogen (V).

EP 0 473 031 B1

Tabelle 1

| Beispiel | Epoxidharz | | | sekundäres Amin | | | Restmodifikator | | | Aminzahl |
|---|---|---|---|---|---|---|---|---|---|---|
| | Menge | (val) | Art | Menge | (val) | Art | Menge | (val) | Art | (mg KOH/g |
| 1 | 200<br>1000 | (1,0)<br>(2,0) | EPH I<br>EPH II | 408 | (0,2) | AM 1 | 130<br>176 | (2,0)<br>(0,8) | DEAPA<br>NPH | 122 |
| 2 | 900 | (4,5) | EPH I | 1120 | (2,0) | AM 2 | 73<br>330 | (1,0)<br>(1,5) | DEA<br>NPH | 69 |
| 3 | 1750 | (3,5) | EPH II | 2242 | (1,0) | AM 3 | 163 | (2,5) | DEAPA | 81 |
| 4 | 200<br>1000 | (1,0)<br>(2,0) | EPH I<br>EPH II | 1632 | (0,8) | AM 1 | 2169 | (2,2) | SPH | 58 |
| 5 | 2000 | (4,0) | EPH II | 560 | (1,0) | AM 2 | 986<br>146 | (1,0)<br>(2,0) | SPH<br>DEA | 76 |
| 6 | 2000 | (4,0) | EPH II | 400 | (2,0) | AM 4 | 260 | (4,0) | DEAPA | 126 |
| 7 | 2000 | (4,0) | EPH II | 540 | (1,8) | AM 5 | 273 | (4,2) | DEAPA | 120 |
| 8 | 3000 | (6,0) | EPH II | 600 | (2,0) | AM 5 | 130<br>146 | (2,0)<br>(2,0) | DEAPA<br>DEA | 87 |

Tabelle 2

| Bindemittel-kombination (BK) | Teile Festsubstanz | | Kataly-sator | Neutra-lisation |
| --- | --- | --- | --- | --- |
| | Bindemittel (ex Beispiel)* | Vernetzungs-mittel | | |
| 1 | 100( 4)/65 EP | -- | 1,0 Sn | 40 |
| 2 | 70( 2)/60 EP | 30 H 1 | 1,0 Sn | 35 |
| 3 | 75( 3)/70 MP | 25 H 2 | 1,2 Pb | 40 |
| 4 | 70( 1)/65 MP | 30 H 1 | 0,8 Sn | 35 |
| 5 | 100( 5)/60 MP | 20 H 1 | 1,0 Sn | 30 |
| 6 | 75( 6)/60 MP | 25 H 1 | 0,8 Sn | 35 |
| 7 | 80( 7)/65 MP | 20 H 1 | 1,0 Sn | 40 |
| 8 | 70( 8)/65 MP | 30 H 1 | 0,8 Sn | 35 |

\* Die Angaben beziehen sich auf die Prozentigkeit und das Lösungsmittel, in welchem das Bindemittel vorliegt.

5

Tabelle 3

| Lack | Schichtstärke $\mu m^{1)}$ | Salzsprühtest mm$^{2)}$ |
|------|------|------|
| 1 | 38 | 1,5 |
| 2 | 32 | 2 |
| 3 | 43 | 2,5 |
| 4 | 33 | 1,5 |
| 5 | 31 | 1 |
| 6 | 34 | 2,5 |
| 7 | 36 | 2 |
| 8 | 32 | 1,5 |
| V | 24 | 6,5 |

$^{1)}$ Maximal erzielbare Schichtstärke bei 32°C Badtemperatur und 135 Sekunden

$^{2)}$ Unterwanderung nach 360 Stunden Testzeit

**Patentansprüche**

1. Verfahren zur Herstellung von nach vollständiger oder teilweiser Neutralisation mit anorganischen und/oder organischen Säuren wasserverdünnbaren Bindemitteln auf der Basis von aminmodifizierten Epoxidharzen, dadurch gekennzeichnet, daß man 5 bis 60 Mol%, vorzugsweise 10 bis 35 Mol%, der Epoxidgruppen eines Epoxidharzes mit mindestens zwei 1,2-Epoxidgruppen pro Molekül, welches durch Umsetzung von Bisphenolen oder Novolaken oder Glykolen mit (Methyl)epichlorhydrin erhalten wurde, und dessen Epoxidäquivalentgewicht 170 bis 1000 beträgt, mit einem sekundäre Aminogruppen aufweisenden Polyoxyalkylenpolyamin und den Rest der Epoxidgruppen in bekannter Weise mit Aminen und/oder Carbonsäuren und/oder substituierten Phenolen bei 60 bis 120°C vollständig umsetzt, wobei die Menge der basischen Komponenten so gewählt wird, daß das Endprodukt eine theoretische Aminzahl von mindestens 30 mg KOH/g, vorzugsweise von 50 bis 110 mg KOH/g, aufweist.

2. Verwendung der nach Anspruch 1 hergestellten Bindemittel zur Formulierung von kathodisch abscheidbaren Elektrotauchlacken.

**Claims**

1. Process for producing binders, which are based on amine-modified epoxide resins and are water-dilutable after complete or partial neutralization with inorganic and/or organic acids, characterized in that 5 to 60 mol %, preferably 10 to 35 mol %, of the epoxide groups of an epoxide resin having at least two 1,2-epoxide groups per molecule which has been obtained by reacting bisphenols or novolaks or glycols with (methyl)epichlorohydrin, and the epoxide equivalent weight of which is 170 to 1000, are reacted with a polyoxyalkylenepolyamine having secondary amino groups and the remainder of the epoxide groups is fully reacted at 60 to 120°C in the known manner with amines and/or carboxylic acids and/or substituted phenols, the quantity of the basic components being selected such that the end product has a theoretical amine number of at least 30 mg of KOH/g, preferably from 50 to 110 mg of KOH/g.

2. Use of the binders produced according to Claim 1, for the formulation of cathodic deposition electro-dip coatings.

**Revendications**

1. Procédé de préparation de liants à base de résines époxydes modifiées par des amines, diluables à l'eau après neutralisation totale ou partielle avec des acides inorganiques et/ou organiques, caractérisé en ce que l'on fait réagir 5 à 60% molaire, de préférence 10 à 35% molaire des groupes époxy d'une résine époxyde possédant au moins deux groupes époxy-1,2 par molécule qui a été obtenue par réaction de bisphénols, de novolaques ou de glycols avec de la (méthyl)épichlorhydrine et dont le poids équivalent d'époxy se situe entre 170 et 1000, avec une polyoxyalkylènepolyamine porteuse de groupes amino secondaires et fait réagir totalement de façon connue le reste des groupes époxy avec des amines et/ou des acides carboxyliques et/ou des phénols substitués entre 60 et 120°C, moyennant quoi la quantité des composants basiques est choisie de manière que le produit final présente un indice d'amine théorique d'au moins 30 mg de KOH/g, de préférence de 50 à 110 mg de KOH/g.

2. Utilisation des liants préparés selon la revendication 1 pour la formulation de peintures électrophorétiques déposables à la cathode.